# EUROPEAN PATENT APPLICATION

(11) **EP 0 721 860 A1**
(43) Date of publication of application: **17.07.1996**
(21) Application number: 96200059.2
(22) Date of filing: 12.01.1996
(51) Int. Cl.: B60R 9/10

(54) **Bicycle carrier**

(30) Priority: 12.01.1995 ZA 9500219
(71) Applicant: KRIGE & COETZEE INDUSTRIAL DESIGNERS CC., Brackenfell 7560 (ZA)
(72) Inventor: Cootzee, Theunis van Eeden, Bonnievale 6730 (ZA)
(74) Representative: Donné, Eddy

(57) **Abstract**

A carrier for carrying bicycles on a vehicle comprises an upright member (12) having, at the lower end thereof, attachment means (14) for attaching the carrier to a towbar fitting of the vehicle, and a carrier arm (16) which is pivotally connected to the upright member. The carrier arm is pivotally displaceable between a folded position in which it extends downwardly to lie along the upright member, and an extended position in which it extends rearwardly of the upright member. When in the extended condition the carrier arm extends at an angle (A) to the horizontal, so that the rear end of the carrier arm is higher than the front end of the carrier arm.

## Description

This invention relates to a bicycle carrier for use in carrying bicycles on a vehicle.

Applicant is aware of a type of bicycle carrier that comprises an upright member having, at the lower end thereof, attachment means for attaching the carrier to the towbar fitting of a vehicle, and a fixed carrier arm which extends rearwardly, in a horizontal direction, from the upper end of the upright member. A disadvantage of this type of bicycle carrier is that, when a number of bicycles are supported one behind the other on the carrier arm, the rearmost bicycles scrape on the ground when the vehicle goes through a dip in the road or, for example, mounts a roadside kerb. Furthermore, it is difficult to closely space a number of bicycles on the carrier arm, because the handle bars and saddle of one bicycle interfere with those of the adjacent bicycle. Also, when not in use to carry bicycles, the rearwardly protruding carrier arm constitutes a hazard to other road users and, when the carrier is demounted, it takes up a lot of space.

A bicycle carrier according to one aspect of the present invention is characterised in that the carrier arm extends rearwardly from the upright member, at an angle to the horizontal, so that the rear end of the carrier arm is higher than the front end of tha carrier arm.

A bicycle carrier according to another aspect of the present invention is characterised in that the carrier arm is displaceable between a folded away condition in which it extends downwardly to lie along the upright member, and an extended condition in which it extends rearwardly from the upright member.

The bicycle carrier may further comprise a strut which extends from the upright member to the carrier arm, for holding the carrier arm in the extended condition.

The strut may be connected to the carrier arm so as to be pivotally displaceable between a folded away condition in which it extends downwardly to lie along the upright member, and an operative condition in which it holds the carrier arm in said extended condition.

The arrangement of the strut may be such that, when the strut is in position to hold the carrier arm in the extended condition, the carrier arm extends at an angle to the horizontal, so that the rear end of the carrier arm is higher than the front end of the carrier arm.

Said angle may be between about 30° and 40° and is preferably in the region of about 35°.

The carrier arm may have a series of cradle forming elements spaced along the length thereof, each cradle forming element being adapted to support a said bicycle.

The cradle forming elements may each be provided with a strap for holding the frame of a said bicycle therein.

The invention will now be described in more detail, by way of example, with reference to the accompanying drawings.

In the drawings:
Figure 1 is a pictorial view of a bicycle carrier in accordance with the invention, showing the carrier arm thereof in the extended condition;
Figure 2 is a side view of the carrier, showing the carrier arm thereof in the extended condition;
Figure 3 is a side view of the carrier, showing the carrier arm thereof in the folded away condition;
Figure 4 is a view of the carrier in the direction of arrow IV in Figure 3, showing a locking pin of the carrier separately;

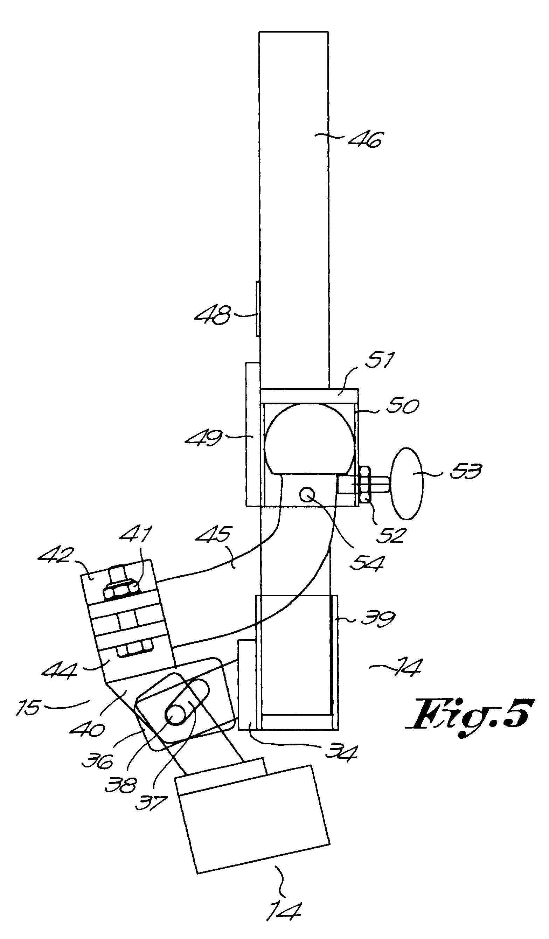

Figure 5 is a detail diagrammatic side view of the lower part of the carrier, showing how it is attached to the towbar of a vehicle;

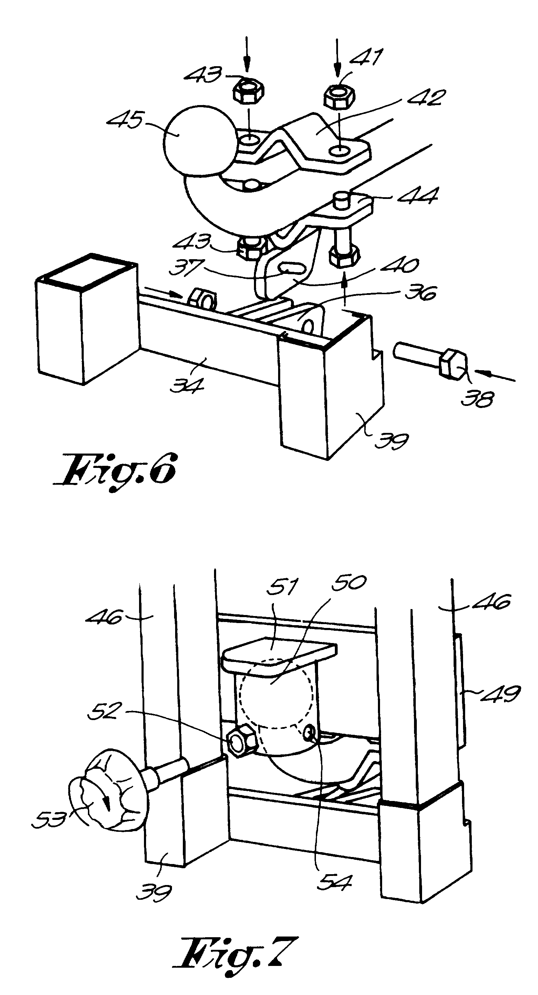

Figures 6 and 7 are pictorial views further showing how the carrier is attached to the towbar;
Figure 8 is a pictorial view illustrating the use of the spacer brackets between the frames of adjacent bicycles supported on the carrier;
Figure 9 is a front elevation of another type of attachment means for mounting the carrier on a vehicle; and
Figure 10 is a side elevation of the attachment means of Figure 9.

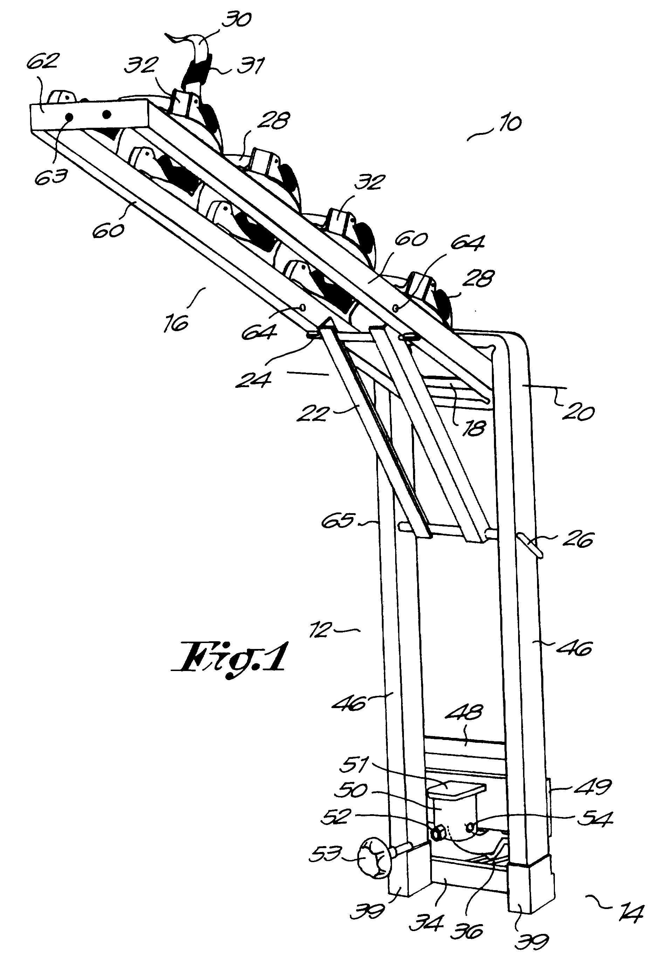

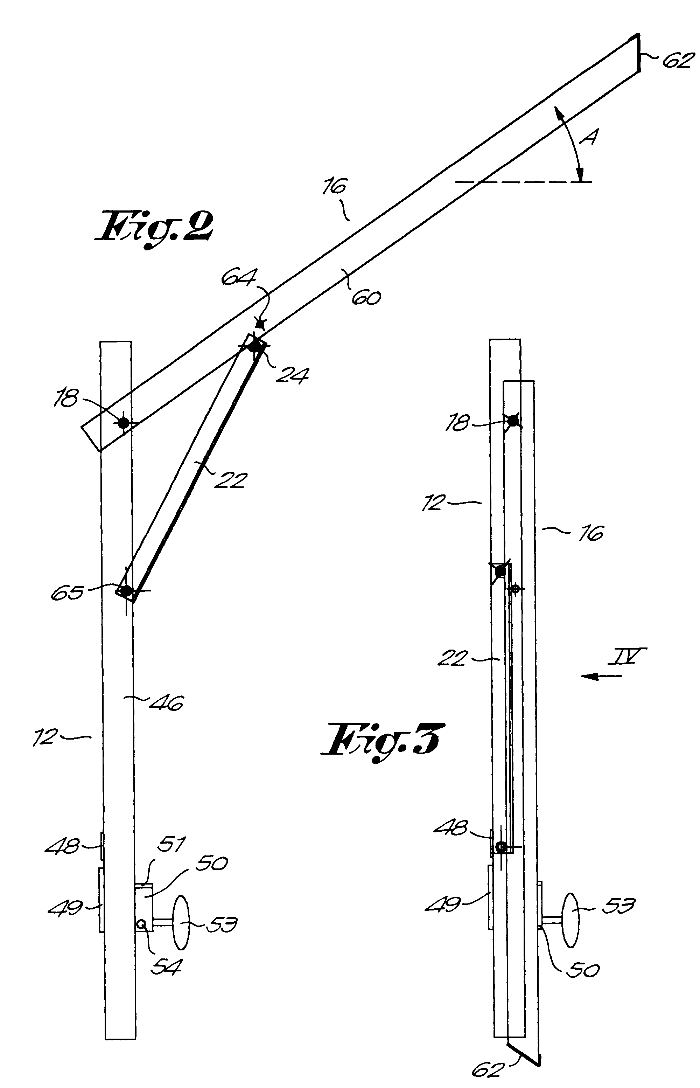

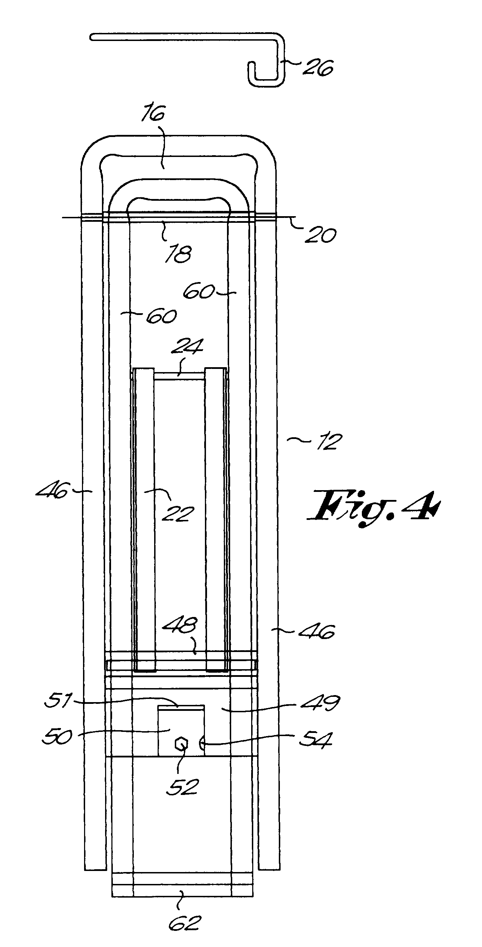

Referring now to the drawings in more detail, reference numeral 10 generally indicates a carrier which comprises an upright member 12, attachment means 14 at the lower end of the upright member, and a carrier arm 16 connected pivotally to the upper end of the upright member. The carrier arm 16 is connected to the upright member 12 by means of a pivot pin 18, whereby the carrier arm is pivotally displaceable about a pivot axis 20, between an extended condition as illustrated in Figures 1 and 2, and a folded away condition in which the carrier arm extends downwardly and lies along the upright member 12 as illustrated in Figures 3 and 4. A strut 22 is provided to keep the carrier arm 16 in the extended position. The strut 22 is pivotally connected to the carrier arm 16 by means of a pivot pin 24, and is disconnectably linked to the upright member 12 by means of a locking pin 26.

On the carrier arm 16 there is mounted a series of cradle forming elements 28 (shown only in Figure 1), the elements 28 being arranged in four pairs with each pair being able to accommodate one bicycle. In other words, the carrier illustrated will be able to carry up to four bicycles.

Each of the cradle forming elements 28 has a v-shaped recess therein which is lined with a layer of rubber or other elastomeric material so as to prevent damage occurring to the paint-work of a bicycle supported on the elements. Furthermore, each of the elements 28 is provided with a strap 30 of nylon webbing having a rubber pad 31 or the like thereon. One end of the strap 30 is secured to the element 28 and the other end thereof is able to pass over the frame of a bicycle supported on that element, and to engage with a notch 32 in the element.

The attachment means 14 comprises a plate 34 which has a pair of fixed arms 36 extending therefrom, a nut and bolt 38 forming a pivot point. At each end of the plate 34 there is a length of vertically extending square section tubing 39 which is affixed to the plate 34.

Further attachment means 15 comprises a shaped plate 42 and a shaped plate 44 which fasten around the shaft or similar structure of a vehicle's towbar 45. An arm 40 which extends from the plate 44 and has a slotted hole 37 therein caters for different types of towbar system. In the assembled condition the arm 40 is disposed between the arms 36, and the bolt 38 passes through holes in the arms 36 and through the slotted hole 37.

The construction of the attachment means 15 is such that the plate 34 can be secured to a vehicle's towbar by tightening fixing bolts 43 and 41 which pass through the plates 44 and 42.

The attachment means 14 and the further attachment means 15 can pivot with respect to one another about the pivot point provided by the bolt 38.

The upright member 12 comprises a length of square section tubing 46 which is bent to form two corners at the upper end. The downwardly extending ends of the tubing 46 are interconnected by means of a straight flat bar 48 and a plate 49. The plate 49 has a short vertically extending tube 50 affixed thereto. The top of tube 50 is covered by a plate 51. A knob 53 having a threaded shank which can screw into a nut 52 affixed to the tube 50 can be used to tighten the carrier onto the ball of the towbar 45.

The carrier 10 can conveniently be locked in position on the towbar 45 by means of a padlock whose staple passes through an opening 54 in the tube 50.

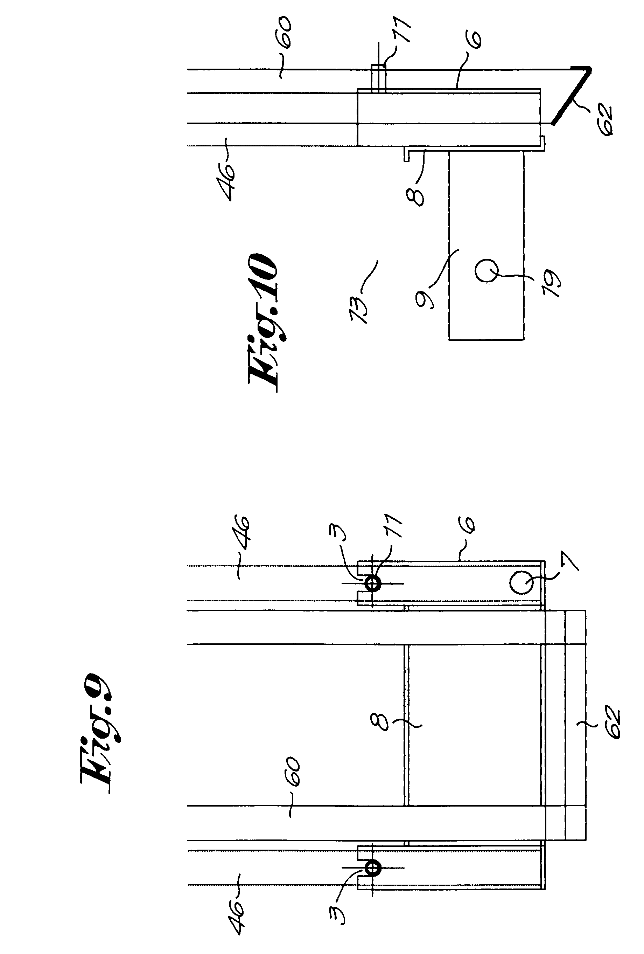

The attachment means 13 shown in Figures 9 and 10 comprises two rectangular section tubes 6, attached to a plate 8. A square section tube 9 extends from the plate 8 and can enter into the towbar receiver of a vehicle. The tube 9 has an opening 19 therein that aligns with a corresponding opening in the receiver, a locking pin being provided to secure the attachment means 13 to the vehicle. Furthermore, the upper ends of each of the two tubes 6 have slots 3 therein. The ends of the tubing 46 can be equipped with threaded studs 11 which enter into the slots 3 when the upright member 12 is in position with respect to the attachment means 13. The upright member 12 can be secured by means of wing nuts or the like which are screwed onto the threaded studs 11. To enable the upright member 12 to be locked in this position, one of the square section tubes 6 is provided, at the lower end thereof, with an opening 7 that aligns with an opening in the corresponding end of the tubing 46. The staple of a padlock can then be passed through the opening 7 and the opening in the corresponding end of the tubing 46.

The carrier arm 16 comprises a pair of square section tubes 60 whose ends are interconnected by means of a flat bar 62. The flat bar 62 is vertical when the carrier arm 16 is in the extended position. Furthermore, a number-plate unit (not shown) may be mounted on the flat bar 62, there being holes 63 in the bar 62 for this purpose.

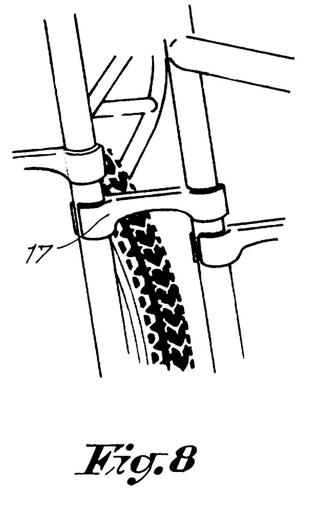

As can best be seen in Figure 2, when the carrier arm 16 is in the extended condition, it extends at an angle A of approximately 35° to the horizontal. This provides the carrier with a significant advantage over other bicycle carriers that are available, in that the bicycles carried on the carrier arm will now be staggered vertically so that they can all be carried on the carrier arm with the handle-bars on the same side. As shown in Figure 8, spacer brackets 17 can be clipped onto the saddle pipes of adjacent bicycles, to prevent lateral swinging and damage to the bicycles and the vehicle.

Furthermore, the rearmost two cradle forming elements 28 can each be used to support a lady's bicycle, with the inclined part of the frame of the bicycle being supported on the elements 28 and the bicycles thus being disposed at an angle. In view of the high elevation of the rearmost two cradle forming elements 28, it will not matter that the bicycles are carried at an angle. Furthermore, by virtue of the fact that the rearmost bicycles will be at a relatively high level, it will be possible for the towing vehicle to go through dips or mount over the kerb onto a pavement on the side of the road, without the rear bicycles scraping on the ground. Furthermore, by virtue of the fact that the bicycles are staggered vertically, and the rearmost bicycles are at a high level, the bicycles will remain visible to the driver of the vehicle through the vehicle's rear view mirror.

When the bicycle carrier 10 is not used to carry bicycles, the locking pin 26 is pulled out of openings 65 in the square section tubing 46, and the strut 22 and carrier arm 16 pivoted down so that they both to lie along the upright member 12 as shown in Figures 3 and 4. The parts 12 and 22 may be held in this position by inserting the locking pin 26 through the opening 65 end a further set of openings 64 which there are in the square section tube 60.

## Claims

1. A bicycle carrier for use in carrying bicycles on a vehicle, the carrier comprising an upright member (12) having, at the lower and thereof, attachment means (14) for attaching the carrier to a towbar fitting of the vehicle, and a carrier arm (16) which extends from the upper end of the upright member, the carrier arm being adapted to support a plurality of bicycles one behind the other, characterised in that the carrier arm (16) extends rearwardly from the upright member (12), at an angle (A) to the horizontal, so that the rear end of the carrier arm is higher than the front end of the carrier arm.

2. A bicycle carrier for use in carrying bicycled on a vehicle, the carrier comprising an upright member (12) having, at the lower and thereof, attachment means (14) for attaching the carrier to a towbar fitting of the vehicle, and a carrier arm (16) which extends from the upper end of the upright member, the carrier arm being adapted to support a plurality of bicycles one behind the other, characterised in that the carrier arm (16) is displaceable between a folded away condition in which it extends downwardly to lie along the upright member (12), and an extended condition in which it extends rearwardly from the upright member.

3. A bicycle carrier as claimed in claim 2, **characterised in that** it comprises a strut (22) extending from the upright member (12) to the carrier arm (16), for holding the carrier arm in the extended condition.

4. A bicycle carrier as claimed in claim 3, **characterised in that** the strut (22) is connected to the carrier arm (16) so as to be pivotally displaceable between a folded away condition in which it extends downwardly to lie along the upright member (12), and an operative condition in which it holds the carrier arm in said extended condition.

5. A bicycle carrier as claimed in claim 3 or claim 4, **characterised in that** the arrangement of the strut (22) is such that, when the strut is in position to hold the carrier arm (16) in the extended condition, the carrier arm extends at an angle (A) to the horizontal, so that the rear end of the carrier arm is higher than the front end of the carrier arm.

6. A bicycle carrier as claimed in claim 1 or claim 5, **characterised in that** said angle (A) is between about 30° and 40°.

7. A bicycle carrier as claimed in claim 6, **characterised in that** said angle (A) is in the region of about 35°.

8. A bicycle carrier as claimed in any one of the preceding claims, **characterised in that** the carrier arm (16) has a series of cradle forming elements (28) spaced along the length thereof, each cradle forming element being adapted to support a said bicycle.

9. A bicycle carrier as claimed in claim 8, **characterised in that** the cradle forming elements (28) are each provided with a strap (30) for holding the frame of a said bicycle therein.
